# NEUE EUROPÄISCHE PATENTSCHRIFT

(11) **EP 0 963 161 B2**
(45) Veröffentlichungstag und Bekanntmachung des Hinweises auf die Entscheidung über den Einspruch: **02.05.2007**
(45) Hinweis auf die Patenterteilung: 06.08.2003
(21) Anmeldenummer: 98904079.5
(22) Anmeldetag: 16.01.1998
(51) Int. Cl.: A23G 3/00

(54) **ZUCKERFREIE DRAGIERTE KAUBONBONS**
SUGAR-FREE DRAGEE CHEWING SWEETS
BONBON A MACHER DRAGEIFIE SANS SUCRE

(30) Priorität: 24.01.1997 DE 19702609
(43) Veröffentlichungstag der Anmeldung: 15.12.1999
(73) Patentinhaber: Südzucker Aktiengesellschaft Mannheim/Ochsenfurt, 68165 Mannheim (DE)
(72) Erfinder: FRITZSCHING, Bodo, D-69502 Hemsbach (DE); KEME, Thomas, CH-5000 AArau (CH); RADOWSKI, Anette, D-68519 Viernheim (DE); WILLIBALD-ETTLE, Ingrid, D-76829 Landau (DE)
(74) Vertreter: Schrell, Andreas
(86) Internationale Anmeldenummer: PCT/EP1998/000216
(87) Internationale Veröffentlichungsnummer: WO 1998/032340

(56) Entgegenhaltungen:
- EP-A- 0 625 578
- DE-A- 2 912 412
- DE-A- 4 436 362
- FR-A- 2 467 597
- US-A- 4 317 838
- US-A- 4 623 543
- US-A- 4 911 937
- US-A- 4 961 935
- US-A- 5 240 732
- US-A- 5 376 389
- US-A- 5 578 336
- Nationales ZDS-Praktikum PNZ-45 Zuckerfreie Dragees, 11.-15. Dezember 1995

## Beschreibung

Die Erfindung betrifft zuckerfreie dragierte Kaubonbons gemäß Anspruch 1 sowie Verfahren zu deren Herstellung gemäß Anspruch 8.

Kaubonbons, die von einer Drageedecke umhüllt sind, sind bekannt. Diese Kaubonbons weisen jedoch den Nachteil auf, daß sie aufgrund ihres Zuckergehaltes nicht für Diabetiker geeignet sind, einen vergleichsweise hohen Brennwert aufweisen sowie die Bildung von Zahnkrankheiten begünstigen.

Der Ersatz des Zuckers durch Zuckeraustauschstoffe in dragierten Kaubonbons gestaltet sich jedoch ausgesprochen kompliziert. Dies liegt unter anderem an dem recht komplexen Aufbau der dragierten Kaubonbons und deren Herstellungsverfahren. So ist es beispielsweise nötig, daß der Kern der dragierten Kaubonbons formstabil ist, so daß er sich prägen und dragieren lassen kann. Zudem darf das fertige dragierte Kaubonbon nicht zu weich sein, um ein Verkleben an den Zähnen zu verhindern. Gleichzeitig darf das dragierte Kaubonbon aber auch nicht zu hart sein, da es sich andernfalls nicht kauen läßt. Schließlich besteht auch das Problem, daß die Drageedecke leicht zum Absplittern neigt, was die Ansehnlichkeit und den Genußwert der Kaubonbons beträchtlich herabsetzt. Die Drageedecken der Kaubonbons müssen zudem aus sensorischen und organoleptischen Gesichtspunkten möglichst knusprig sein, wobei gleichzeitig ein Verkleben der einzelnen dragierten Produkte untereinander unerwünscht ist. Dragierte zuckerfreie Bonbons zum Kauen, die den vorgenannten Anforderungen genügen, sind bisher nicht bekannt.

Das der vorliegenden Erfindung zugrundeliegende technische Problem liegt darin, dragierte Kaubonbons bereitzustellen, die die vorgenannten Nachteile überwinden.

Die vorliegende Erfindung löst dieses Problem, indem sie dragierte, mindestens ein Süßungsmittel umfassende Kaubonbons bereitstellt, die einen Weichkaramellenkern und eine Drageedecke aufweisen, wobei das dragierte Kaubonbon vollkommen zuckerfrei ist und eine zwischen Weichkaramellenkern und Drageedecke angeordnete, den Weichkaramellenkern unhältende Stabilisierungsschicht aus einer kurzgezogenen Weichkaramellen masse aufweist. Im Zusammenhang mit der vorliegenden Erfindung wird unter einem Kaubonbon ein Arznei-, Genuß- oder Lebensmittel verstanden, das nach Aufnahme in die Mundhöhle eines Menschen oder Tieres aufgrund seiner flexiblen Struktur und Konsistenz zum Kauen geeignet ist, das heißt verformbar ist und bei größerer mechanischer Belastung nicht splittert oder zerbricht. Insbesondere wird darunter ein Kaubonbon verstanden, dessen Einlage ein spezifisches Gewicht von 0,8 bis 1,5 g/cm³, vorzugsweise 1,0 g/cm³, aufweist. Unter einer Einlage wird der Kaubonbon-Kern und die Stabilisierungsschicht verstanden.

Die Erfindung sieht also vor, daß sowohl die Drageedecke als auch der Weichkaramellenkern keinen Zucker enthalten. Die Erfindung sieht zur Herstellung der dragierten Kaubonbons demgemäß nicht die Verwendung von zuckerhaltigen Süßungsmitteln, sondern von zuckerfreien Süßungsmitteln vor.

In besonders bevorzugter Weise sieht die Erfindung die Verwendung von einem äquimolaren Gemisch aus 6-0-α-D-Glucopyranosyl-D-sorbit (1,6-GPS) und 1-0-α-D-Glucopyranosyl-mannit (1,1-GPM), also Isomalt® oder hydrierte Isomaltulose, als Süßungsmittel vor.

In einer weiteren bevorzugten Ausführungsform sieht die Erfindung vor, als Süßungsmittel ein in der EP 0 625 578 B1 beschriebenes Süßungsmittelgemisch aus 1,6-GPS, 1,1-GPM und 1-0-α-D-Glucopyranosyl-D-sorbit (1,1-GPS) sowie gegebenenfalls Mannit, Sorbit, hydrierter oder nicht hydrierter Oligosaccharide oder gegebenenfalls vorhandener Rest-Saccharose zu verwenden.

In erfindungsgemäß besonders vorteilhafter Weise wird ein Süßungsmittelgemisch aus 10 bis 50 Gew.-% 1,6-GPS, 2 bis 20 Gew.-% 1,1-GPS und 30 bis 70 Gew.-% 1,1-GPM eingesetzt.

Die Erfindung sieht jedoch auch vor, daß ein Süßungsmittelgemisch aus 5 bis 10 Gew.-% 1,6-GPS, 30 bis 40 Gew.-% 1,1-GPS und 45 bis 60 Gew.-% 1,1-GPM eingesetzt wird (alle Gew.-%-Angaben bezogen auf den Trockensubstanzgehalt). Selbstverständlich sind erfindungsgemäß auch andere Süßungsmittel einsetzbar, solange diese zuckerfrei sind.

Der Anteil des Süßungsmittels an dem Weichkaramellenkern beträgt vorzugsweise 60 bis 90 Gew.-% (bezogen auf die Trockensubstanz). Der Anteil des Süßungsmittels an der Drageedecke beträgt vorzugsweise 90 bis 100 Gew.-% (bezogen auf die Trokkensubstanz).

Die vorgenannten, erfindungsgemäßen dragierten Kaubonbons zeichnen sich durch eine überraschenderweise auftretende, kaugummiähnliche Textur aus. Diese, auch als "längere Textur" bezeichnete Textur beruht möglicherweise darauf, daß die erfindungsgemäß vorgesehenen Süßungsmittel nicht so schnell wie Zucker auskristallisieren. Die längere Textur führt zu dem vorteilhaften Effekt, daß die Kaubonbons nicht, wie herkömmliche dragierte Kaubonbons, leicht im Mund zerbissen werden können, sondern vielmehr länger im Mund verweilen können. Dadurch ergibt sich eine vorteilhafterweise verlängerte Freisetzung von in den dragierten Kaubonbons enthaltenen Aromen, Geschmacksstoffen oder gesundheitsfördernden oder -erhaltenden, insbesondere medizinisch aktiven Bestandteilen. Die erfindungsgemäßen zuckerfreien dragierten Kaubonbons zeichnen sich darüber hinaus durch eine ausgesprochen knusprige, nicht klebende Drageedecke sowie Formstabilität aus.

Die Erfindung betrifft als die vorgenannten dragierten Kaubonbons, wobei zwischen dem Weichkaramellenkern und der Drageedecke eine Stabilisierungsschicht angeordnet ist, die den Weichkaramellenkern umhüllt. Die Stabilisierungsschicht ist aus einer Weichkaramelmasse, hämlich einer kurzgezogenen Weichkaramelmasse, hergestellt. Im Zusammenhang mit der vorliegenden Erfindung wird unter einer kurzgezogenen Weichkaramelmasse eine Weichkaramelmasse verstanden, die 0.1 bis 10 min, vorzugsweise 1 min, gezogen wurde. Selbstverständlich kann auch vorgesehen sein, zusätzlich zu dem Ziehen ein Belüften der Weichkaramelmasse durchzuführen. Die Weichkaramelmasse, die als Stabilisierungsschicht auf den Weichkaramellenkern aufgetragen wird, kann beispielsweise durch Umwickeln oder durch Koextrusion um den Weichkaramellenkern gelegt werden. Die Stabilisierungsschicht hält den Weichkaramellenkern in der gewünschten Form, so daß beim anschließenden Formprozeß, beispielsweise einem Präge- oder Stanzprozeß, die bevorzugt vorgesehene Form, beispielsweise Linsenform, der Kaubonbons erhalten und danach dragiert werden kann. Die Erfindung sieht also vor, daß die dragierten Kaubonbons mit einer Stabilisierungsschicht aus einer kurzgezogenen Weichkaramelmasse ausgeführt sind.

Die Erfindung sieht ferner in vorteilhafter Weise vor, daß die dragierten Kaubonbons zusätzlich medizinisch wirksame beziehungsweise gesundheitsfördernde oder -erhaltende Bestandteile enthalten. Medizinisch wirksame beziehungsweise gesundheitsfördernde oder -erhaltende Bestandteile können beispielsweise Eukalyptus, Menthol, Benzocain, Cetylpyridinium, Dextrometorphan, Hexylresorcin/Menthol, Dyclonin, Phenylpropanolamin, Omega-3-Fettsäuren, Vitamine, Mineralstoffe, Calciumpräparate, Magnesiumpräparate oder Selenverbindungen sein.

Die Erfindung sieht auch vor, daß die dragierten Kaubonbons neben den oder einem der genannten Süßungsmittel weitere zusätzliche Bestandteile, wie Intensivsüßstoffe, Aspartam, Acesulfam K, Maltitsirup, Proteine oder Hydrolysate, Gelatine, Oligofructosaccharide, Inulin, Mono- und Disaccharid-Alkohole, Fettersatzstoffe, Polydextrose, Salatrim, Pflanzenfett, Hydrokolloide, Gummi arabicum, Farbstoffe, wie Titandioxid, Emulgatoren, Lecithin, Aromastoffe, lebensmittelverträgliche Säuren, wie Zitronensäure, oder ähnliches enthalten.

Die Erfindung sieht ferner vor, daß das Gewicht der Drageedecke 10 bis 50 Gew.-% (bezogen auf die Trockensubstanz) des Gewichtes des dragierten Kaubonbons beträgt.

Die Erfindung betrifft auch Verfahren zur Herstellung zuckerfreier dragierter Kaubonbons, die das Herstellen der Weichkaramellen-Kernmasse und der Stabilisierungsschichtmasse, das Ziehen oder Belüften der Weichkaramellen-Kernmasse und der Stabilisierungsschichtmasse, das Zusammenführen der beiden Massen, das Formen, beispielsweise Stanzen oder Prägen, gegebenenfalls das Oberflächenbehandeln, zum Beispiel Vorgummieren, der so hergestellten Einlagen und das anschließende Dragieren der gegebenenfalls vorgummierten Einlage umfaßt wobei die Stabilisierungsschicht masse eine kurzgezogene Weichkaramellenmasse ist.

In besonders bevorzugter Weise ist vorgesehen, daß die Weichkaramellen-Kernmasse aus hydrierter Isomaltulose, Maltitsirup, Wasser, Gelatine, Pflanzenfett, Emulgatoren, Zitronensäure und Pfefferminzaroma oder Fruchtaromen hergestellt wird. Die Erfindung sieht in vorteilhafter Weise vor, daß die hydrierte Isomaltulose und Maltitsirup zur Herstellung der Weichkaramellen-Kernmasse bei Normaldruck und/oder unter Vakuum bis auf einen Endwassergehalt des Fertigproduktes von 3 bis 9% gekocht und anschließend die weiteren Bestandteile in der angegebenen Reihenfolge hinzugegeben sowie homogenisiert werden. Bevorzugt wird auf einen Endwassergehalt von 6% gekocht.

Die Erfindung sieht ferner vor, daß die Weichkaramellen-Kernmasse im Anschluß an das vorstehend beschriebene Homogenisieren vorteilhafterweise auf 30 bis 50°C, bevorzugt 42 bis 48°C, abgekühlt wird.

Die Erfindung sieht in einer weiteren bevorzugten Ausführungsform vor, daß die Ziehzeit oder die Belüftungszeit der Weichkaramellen-Kernmasse 1 bis 15 min, bevorzugt 8 min, beträgt. Bei der Herstellung der erfindungsgemäßen eine Stabilisierungsschicht aufweisenden, dragierten Kaubonbons ist eine Ziehzeit der Masse für die Stabilisierungsschicht von über 0 bis 10 min, bevorzugt 1 min, vorgesehen.

Bei der Herstellung der erfindungsgemäßen dragierten Kaubonbons mit Stabilisierungsschicht liegt die Oberflächen-Temperatur des Stranges vor dem Formen bei 25 bis 50°C, vorzugsweise bei 36°C.

Die Erfindung sieht in weiteren Ausführungsformen die vorgenannten Herstellungsverfahren vor, wobei die Einlagen nach dem Formen, insbesondere Prägen, eine Kühlvorrichtung, beispielsweise einen Kühltunnel, durchlaufen und wobei vorteilhafterweise die Temperatur der Einlagen nach dem Durchlaufen des Kühltunnels bei 10 bis 30°C, bevorzugt 25°C, liegen. Im Anschluß daran sieht das erfindungsgemäße Verfahren nach der vorteilhafterweise durchgeführten Oberflächenbehandlung, zum Beispiel einem Vorgummieren, ein Dragieren mit einer Suspension aus beispielsweise hydrierter Isomaltulose, Wasser, Gummi arabicum, Farbstoff und Intensivsüßstoff vor. Die Dragierung kann auch in Form einer Weichdragierung oder einer Hart-/Weichdragierung durchgeführt werden.

Weitere vorteilhafte Ausgestaltungen der Erfindung ergeben sich aus den weiteren Unteransprüchen.

Die Erfindung wird im folgenden anhand den Ausführungsbeispiel näher erläutert.

### Beispiel

### Herstellung eines zuckerfreien Kaubonbons mit Stabilisierungsschicht aus einer Weichkaramelmasse

1. Herstellung der Weichkaramellenmasse für Kern und Stabilisierungsschicht:
1.1 Rezeptur

| | % |
|---|---|
| ISOMALT® (Typ M) | 24,20 |
| Maltitsirup (75% TS) | 51,30 |
| Wasser | 5,00 |
| Gelatine 120 Bloom (40%) | 3,55 |
| Pflanzenfett (34-36°Sp) | 5,80 |
| Emulgator | 0,75 |
| Zitronensäure (Monohydrat) | 0,70 |
| ISOMALT® (Typ PF) | 8,40 |
| Fruchtaroma | 0,30 |

1.2 Herstellung
- ISOMALT® (Typ M) , Maltitsirup und Wasser werden bei 125 - 135°C, bevorzugt 131°C, in einem Kessel gekocht.
- Zugabe der Gelatine-Lösung.
- Zugabe von Pflanzenfett, Emulgator, Zitronensäure, ISOMALT® (Typ PF) in angegebener Reihenfolge, wobei 2 bis 3 Minuten bei hoher Geschwindigkeit gemischt wird, bis eine homogene Mischung erreicht ist.
- Zugabe von Fruchtaroma, Mischen, Entleeren des Kessels.
- Homogenisieren unter Verwendung eines geeigneten Homogenisators.
- Kühlen der Masse auf 42 bis 48°C.
- Ziehzeit der Masse für den Kern: 1 bis 15 min., bevorzugt 8 min. Ziehzeit der Masse für die Stabilisierungsschicht: über 0 bis 10 min., bevorzugt 1 min.
Das Herstellen der Weichkaramelmasse kann auf einem Satzkocher oder auf kontinuierlichen Kochanlagen erfolgen.
Das Ziehen der Masse erfolgt mit den üblichen Ziehmaschinen oder auf kontinuierlichen Ziehmaschinen beziehungsweise bei Belüftung mit üblichen Belüftungsmaschinen.
2. Zusammenführen der Massen im Kegelroller und Formen der zusammengeführten Massen:
Die Kernmasse wird zuerst in den Kegelroller hineingegeben beziehungsweise kontinuierlich zugeführt, so daß sich ein Kegel bildet. Die Masse hat eine Temperatur von 40 bis 50°C, bevorzugt von 45°C.
Parallel dazu wird über einen vertikalen Kegelroller die Stabilisierungsschichtmasse zu einem Teppich von 1 bis 2 cm gewalzt und als äußere Schicht um den Kegel der Kernmasse gewickelt. Das Verhältnis der Stabilisierungsschicht zum Kern liegt bei 1 : 99%, bevorzugt bei 55 : 45% (% bezogen auf das Gesamtgewicht der Einlage).
Die zusammengeführten Massen werden dann zu einem Strang ausgezogen, wobei die Oberflächen-Temperatur der Masse bei etwa 36°C liegt. Der Strang wird zu vorzugsweise linsenförmigen Einlagen mit Hilfe einer Prägemaschine oder Prägewalze geformt. Nach dem Verlassen des Kühltunnels liegt die Temperatur der Einlagen bei 15 bis 30°C, bevorzugt bei 25°C.
3. Vorgummieren der Einlagen
Die Einlagen werden sofort nach dem Verlassen des Kühltunnels in Behältern aufgefangen und vorgummiert. Dazu wird ein 50%ige Quick Coat-Lösung (Wolff & Olsen, Hamburg) mit 10% Titandioxid hergestellt, die in einer Menge auf die Einlagen aufgetragen wird, daß die Einlagen gut benetzt sind. Anschließend wird mit Quick Coat-Pulver abgestreut, bis die Einlagen trocken laufen. Dieser Vorgang wird bis zu zwei- bis dreimal wiederholt, so daß die Einlagen gegen Volumenveränderungen stabil sind und untereinander nicht verkleben.
4. Dragieren
4.1 Rezeptur
Das Dragieren erfolgt mit einer ISOMALT®-Suspension nach folgender Rezeptur:

| | % |
|---|---|
| ISOMALT® (Typ M) | 43,65 |
| Wasser | 29,00 |
| Acesulfam K | 0,05 |
| Aspartam | 0,05 |
| TiO₂ | 1,00 |
| Gummi arabicum (Lösung 1:1) | 4,10 |
| ISOMALT® (Typ PF) | 22,15 |

4.2 Herstellung der Suspension
1.Herstellung der Lösung
   - ISOMALT® (Typ M) wird in heißes Wasser eingerührt und auf 70 bis 80°C erhitzt, bis eine kristallfreie Lösung vorliegt.
2.Herstellung der Suspension
   - die wie vorstehend beschrieben hergestellte Lösung wird auf 60°C abgekühlt.
   - Aspartam, Acesulfam K, Gummi arabicum-Lösung, TiO₂ und ISOMALT® (Typ PF) werden zugegeben und gerührt, bis eine homogene Masse vorliegt.
   - Die Temperatur der Suspension wird während des Prozesses bei 60°C gehalten.
Das Gewicht der Drageedecke beträgt 10 bis 50% des Gewichtes des fertigen dragierten Kaubonbons (bezogen auf die Trockensubstanz).
Die auf diese Weise hergestellten zuckerfreien dragierten Kaubonbons mit einer Stabilisierungsschicht aus einer Weichkaramelmasse zeichen sich insbesondere durch die Formstabilität ihrer Einlagen aus. Dies ermöglicht eine größere Variabilität bei der Wahl der Einlagengröße.

## Patentansprüche

1. Dragiertes, mindestens ein Süßungsmittel umfassendes Kaubonbon mit einem Weichkaramellenkern und einer Drageedecke, **dadurch gekennzeichnet, daß** das dragierte Kaubonbon zuckerfrei ist und eine zwischen Weichkaramellenkern und Drageedecke angeordnete, den Weichkaramellenkern umhüllende Stabilisierungsschicht aus einer kurzgezogenen Weichkaramellenmasse aufweist.

2. Dragiertes Kaubonbon nach einem der vorhergehenden Ansprüche, **dadurch gekennzeichnet, daß** das Süßungsmittel hydrierte Isomaltulose ist.

3. Dragiertes Kaubonbon nach einem der vorhergehenden Ansprüche, **dadurch gekennzeichnet, daß** das Süßungsmittel ein Gemisch aus 1,1-GPS (1-O-α-D-Glucopyranosyl-D-sorbit), 1,1-GPM (1-O-α-D-Glucopyranosyl-mannit) und 1,6-GPS (6-O-α-D-Glucopyranosyl-D-sorbit) sowie gegebenenfalls Sorbit, Mannit, hydrierten oder nicht hydrierten Oligosacchariden ist.

4. Dragiertes Kaubonbon nach einem der vorhergehenden Ansprüche, **dadurch gekennzeichnet, daß** das dragierte Kaubonbon neben dem Süßungsmittel Maltitsirup, Protein, Hydrolysate, Hydrokolloide, Fettersatzstoffe, Oligofructosaccharide, Inulin, Polydextrose, Salatrim, Mono- oder Disaccharidalkohole, Gelatine, Pflanzenfett, Gummi arabicum, Acesulfam K, Aspartam, Farbstoffe, Geschmacksstoffe, Aromen, lebensmittelverträgliche Säuren und/oder Emulgatoren enthält.

5. Dragiertes Kaubonbon nach einem der vorhergehenden Ansprüche, **dadurch gekennzeichnet, daß** das dragierte Kaubonbon zusätzlich medizinisch wirksame Bestandteile, Vitamine oder Mineralstoffe enthält.

6. Dragiertes Kaubonbon nach einem der vorhergehenden Ansprüche, **dadurch gekennzeichnet, daß** das Gewicht der Drageedecke 10 bis 50 Gew.-% (bezogen auf die Trockensubstanz) des Gewichts des dragierten Kaubonbons beträgt.

7. Dragiertes Kaubonbon nach einem der vorhergehenden Ansprüche, **dadurch gekennzeichnet, daß** das spezifische Gewicht der Kaubonbon-Einlage 0,8 bis 1,5 g/cm³, vorzugsweise 1,0 g/cm³, beträgt.

8. Verfahren zur Herstellung eines zuckerfreien dragierten Kaubonbons, insbesondere nach einem der Ansprüche 1 bis 7, umfassend das Herstellen der Weichkaramellen-Kernmasse und der Stabilisierungsschichtmasse, das Ziehen oder Belüften der Weichkaramellen-Kernmasse und der Stabilisierungsschichtmasse, das Zusammenführen der beiden Massen, das Formen sowie das anschließende Dragieren der so hergestellten Einlage, wobei die Stabilisierungsschichtmasse eine kurzgezogene Weichkaramellenmasse ist.

9. Verfahren nach Anspruch 8, wobei die Oberflächen-Temperatur der zusammengeführten Weichkaramellen-Kernmasse und der Stabilisierungsschichtmasse vor dem Formen bei 25 bis 50°C, vorzugsweise bei 36°C, liegt.

10. Verfahren nach Anspruch 8 oder 9, wobei die Weichkaramellen-Kernmasse aus hydrierter Isomaltulose, Maltitsirup und weiteren Bestandteilen hergestellt wird.

11. Verfahren nach Anspruch 10, wobei die hydrierte Isomaltulose und Maltitsirup bei Normaldruck und/oder unter Vakuum auf einen Endwassergehalt von 3 bis 9%, insbesondere 6%, gekocht wird (bezogen auf das Endprodukt) und anschließend die weiteren Bestandteile zugegeben werden.

12. Verfahren nach einem der Ansprüche 8 bis 11, wobei die Weichkaramellen-Kernmasse und/oder die Stabilisierungsschichtmasse vor dem Ziehen auf 30 bis 50 °C, bevorzugt 42 bis 48°C, abgekühlt wird.

13. Verfahren nach einem der Ansprüche 8 bis 12, wobei die Einlagen nach dem Formen und vor dem Dragieren einer Oberflächenbehandlung, insbesondere einem Vorgummieren, unterzogen werden.

14. Verfahren nach einem der Ansprüche 8 bis 13, wobei die Ziehzeit oder die Belüftungszeit für die Weichkaramellen-Kernmasse 1 bis 15 min, bevorzugt 8 min, beträgt.

15. Verfahren nach einem der Ansprüche 8 bis 14, wobei die Ziehzeit oder die Belüftungszeit für die Stabilisierungsschichtmasse 0,1 bis 10 min, bevorzugt 1 min, beträgt.

## Claims

1. A coated chewing sweet comprising at least one sweetener, having a soft caramel core and a sweet covering, **characterised in that** the coated chewing sweet is sugar-free and comprises a stabilising layer which is disposed between the soft caramel core and the sweet covering and which envelopes the soft caramel core, wherein the stabilising layer is made of a short-drawn soft caramel substance.

2. A coated chewing sweet according to any one of the preceding claims, **characterised in that** the sweetener is hydrogenated isomaltulose.

3. A coated chewing sweet according to any one of the preceding claims, **characterised in that** the sweetener is a mixture of 1,1-GPS (1-O-α-D-glucopyranosyl-D-sorbitol), 1,1-GPM (1-O-α-D-glucopyranosyl-mannitol) and 1,6-GPS (6-O-α-D-glucopyranosyl-D-sorbitol), and optionally sorbitol, mannitol, hydrogenated or non-hydrogenated oligosaccharides.

4. A coated chewing sweet according to any one of the preceding claims, **characterised in that**, in addition to the sweetener, the coated chewing sweet contains maltite syrup, protein, hydrolysates, hydrocolloids, fat substitutes, oligofructosaccharides, inulin, polydextrose, salatrim, mono- or disaccharide alcohols, gelatin, vegetable fat, gum arabic, acesulfam K, aspartame, colouring matter, flavourings, aromas, foodstuff-compatible acids and/or emulsifiers.

5. A coated chewing sweet according to any one of the preceding claims, **characterised in that** the coated chewing sweet additionally contains medicinally active constituents, vitamins or mineral substances.

6. A coated chewing sweet according to any one of the preceding claims, **characterised in that** the weight of the sweet covering is 10 to 50 % by weight (in relation to the dry substance) of the weight of the coated chewing sweet.

7. A coated chewing sweet according to any one of the preceding claims, **characterised in that** the specific weight of the chewing sweet filling is 0.8 to 1.5 g/cm³, preferably 1.0 g/cm³.

8. A method of producing a sugar-free coated chewing sweet, in particular according to any one of claims 1 to 7, comprising the production of the soft caramel core substance and of the stabilising layer substance, the drawing or aeration of the soft caramel core substance and of the stabilising layer substance, the bringing-together of the two substances, the moulding and subsequent coating of the filling thus produced, wherein the stabilising layer substance is a short-drawn soft caramel substance.

9. A method according to claim 8, wherein the surface temperature of the soft caramel core substance and of the stabilising layer substance brought together is, before moulding, at 25 to 50°C, preferably at 36°C.

10. A method according to any one of claims 8 or 9, wherein the soft caramel core substance is produced from hydrogenated isomaltulose, maltite syrup and further constituents.

11. A method according to claim 10, wherein the hydrogenated isomaltulose and maltite syrup are cooked at normal pressure and/or under vacuum to a final water content of 3 to 9 %, in particular 6 % (in relation to the end product) and, subsequently, the further constituents are added.

12. A method according to any one of claims 8 to 11, wherein the soft caramel core substance and/or the stabilising layer substance is cooled before drawing to 30 to 50°C, preferably 42 to 48°C.

13. A method according to any one of claims 8 to 12, wherein after the moulding and before the coating the fillings undergo a surface treatment, in particular pregumming.

14. A method according to any one of claims 8 to 13, wherein the drawing time or the aeration time for the soft caramel core substance is 1 to 15 min., preferably 8 min.

15. A method according to any one of claims 8 to 14, wherein the drawing time or the aeration time for the stabilising layer substance is 0.1 to 10 min., preferably 1 min.

## Revendications

1. Bonbon à mâcher dragéifié comportant au moins un produit édulcorant, avec un noyau en caramel mou et un enrobage dragéifié, **caractérisé en ce que** le bonbon à mâcher dragéifié est sans sucre et présente une couche de stabilisation disposée entre le noyau en caramel mou et l'enrobage dragéifié et entourant le noyau en caramel mou, dans lequel la couche de stabilisation est d'une pâte en caramel mou brièvement étirée.

2. Bonbon à mâcher dragéifié selon l'une des revendications précédentes, **caractérisé en ce que** le produit édulcorant est de l'isomaltulose hydrogéné.

3. Bonbon à mâcher dragéifié selon l'une des revendications précédentes, **caractérisé en ce que** le produit édulcorant est un mélange de 1,1-GPS (1-O-α-D-glucopyranosyl-D-sorbite), de 1,1-GPM (1-O-α-D-glucopyranosyl-mannite) et de 1,6-GPS (6-O-α-D-glucopyranosyl-D-sorbite), et le cas échéant de sorbite, de mannite, d'oligosaccarides hydrogénés ou non.

4. Bonbon à mâcher dragéifié selon l'une des revendications précédentes, **caractérisé en ce que**, outre le produit édulcorant, le bonbon à mâcher dragéifié contient du sirop de maltite, des protéines, des hydrolysats, des hydrocolloïdes, des substituts de graisse, des oligofructosaccarides, de l'inuline, de la polydextrose, du salatrime, des mono- ou disaccharide alcools, de la gélatine, de la graisse végétale, de la gomme arabique, de l'acésulfame K, de l'aspartame, des colorants, des agents aromatisants, des arômes, des acides alimentaires et/ou des émulsifiants.

5. Bonbon à mâcher dragéifié selon l'une des revendications précédentes, **caractérisé en ce que** le bonbon à mâcher dragéifié contient supplémentairement des composants médicalement efficaces, des vitamines ou des minéraux.

6. Bonbon à mâcher dragéifié selon l'une des revendications précédentes, **caractérisé en ce que** le poids de l'enrobage dragéifié est de 10 à 50 % en poids (par rapport à la matière sèche) du poids du bonbon à mâcher dragéifié.

7. Bonbon à mâcher dragéifié selon l'une des revendications précédentes, **caractérisé en ce que** le poids spécifique de la garniture du bonbon à mâcher est de 0,8 à 1,5 g/cm³, de préférence de 1,0 g/cm³.

8. Procédé de production d'un bonbon à mâcher dragéifié sans sucre, notamment selon l'une des revendications 1 à 7, comprenant la production de la pâte de noyau en caramel mou et de la pâte de couche de stabilisation, l'étirage ou l'aération de la pâte de noyau en caramel mou et de la pâte de couche de stabilisation, l'assemblage des deux pâtes, le moulage et la dragéification qui suit de la garniture ainsi produite, dans lequel la pâte de couche de stabilisation est une pâte en caramel mou brièvement étirée.

9. Procédé selon la revendication 8, dans lequel la température superficielle de la pâte de noyau en caramel mou et de la pâte de couche de stabilisation avant le moulage est de l'ordre de 25 à 50°C, de préférence de l'ordre de 36°C.

10. Procédé selon l'une des revendications 8 ou 9, dans lequel la pâte de noyau en caramel mou est obtenue à partir d'isomaltulose hydrogéné, de sirop de maltite et d'autres composants.

11. Procédé selon la revendication 10, dans lequel l'isomaltulose hydrogéné et le sirop de maltite sont réduits par cuisson, sous pression normale et/ou sous vide, jusqu'à une teneur en eau finale de 3 à 9 %, notamment de 6 % (par rapport au produit final), et les autres composants sont ensuite ajoutés.

12. Procédé selon l'une des revendications 8 à 11, dans lequel la pâte de noyau en caramel mou et/ou ou la pâte de couche de stabilisation sont refroidies avant l'étirage de 30 à 50°C, de préférence de 42 à 48°C.

13. Procédé selon l'une des revendications 8 à 12, dans lequel les garnitures, après le moulage et avant la dragéification, sont soumises à un traitement de surface, notamment à un pré-gommage.

14. Procédé selon l'une des revendications 8 à 13, dans lequel le temps d'étirage ou le temps d'aération pour la pâte de noyau en caramel mou est de 1 à 15 min., de préférence de 8 min.

15. Procédé selon l'une des revendications 8 à 14, dans lequel le temps d'étirage ou le temps d'aération pour la pâte de couche de stabilisation est de 0,1 à 10 min., de préférence de 1 min.
